# EUROPEAN PATENT SPECIFICATION

(11) **EP 2 675 061 B1**
(45) Date of publication and mention of the grant of the patent: **01.05.2019**
(21) Application number: 12744746.4
(22) Date of filing: 03.02.2012
(51) Int. Cl.: H02P 27/06, H02K 1/27, H02P 27/16

(54) **MOTOR DRIVE DEVICE**
MOTORANTRIEBSVORRICHTUNG
DISPOSITIF D'ENTRAÎNEMENT À MOTEUR ÉLECTRIQUE

(30) Priority: 08.02.2011 JP 2011024914
(43) Date of publication of application: 18.12.2013
(73) Proprietor: Panasonic Corporation, Osaka 571-8501 (JP)
(72) Inventor: FUKUE, Takashi, Chuo-ku, Osaka 540-6207 (JP)
(74) Representative: Eisenführ Speiser
(86) International application number: PCT/JP2012/000736
(87) International publication number: WO 2012/108158

(56) References cited:
- EP-A1- 2 034 605
- JP-A- 2 214 452
- JP-A- 5 091 787
- JP-A- 2009 089 462
- JP-A- 2009 100 558
- JP-A- 2010 193 537

## Description

### Technical Field

The present invention relates to motor drive devices for driving a motor with an AC output having a variable voltage and a variable frequency resulted from direct switching on an output created by full-wave rectification of an input from a single-phase AC power supply or on the single-phase AC power supply.

### Background Art

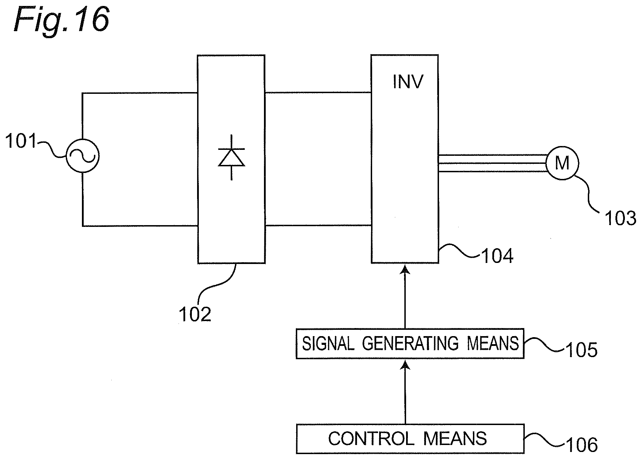

Fig. 16 schematically illustrates the structure of a conventional motor drive device. As illustrated in Fig. 16, the conventional motor drive device includes a rectification circuit 102 for performing full-wave rectification on the output of a single-phase AC power supply 101, and an inverter 104 adapted to perform switching on the rectified output from the rectification circuit 102 for providing an AC output with a variable voltage and a variable frequency and to drive a motor 103 with the AC output. Further, the motor drive device includes a signal generating means 105 adapted to generate a PWM signal for turning on and off the switching devices in the inverter 104 based on a voltage command value, and a control means 106 adapted to perform control for advancing the timing of the output of the PWM signal for forwarding the phase of the inverter output voltage, in a saturation state where it is impossible to provide the inverter output voltage such that it corresponds to the voltage command value, even by performing control for increasing the pulse width of the PWM signal.

In cases where the motor 103 is driven with the AC output created by switching operations of the inverter 104 on the pulsating voltage from the rectification circuit 102, within the time interval within which the instantaneous voltage value of the pulsating voltage is lower than a predetermined level, a saturation state is induced, wherein it is impossible to provide the inverter output voltage such that it corresponds to the voltage command value, even by performing control for increasing the pulse width of the PWM signal. In such a saturation state, namely when the motor induced voltage is larger than the inverter output voltage, the control means 106 performs phase forwarding control for advancing the timing of the output of the PWM signal for forwarding the phase of the inverter output voltage (refer to Patent Literature 1, for example).

The execution of such phase forwarding control induces a phenomenon of dropping of the voltages at terminals of the motor 103. Within the time interval within which the voltages at the terminals of the motor 103 have been dropped, the electric current outputted from the inverter 104 is flowed into the motor 103. This results in an increase of the time interval within which a torques is generated in the motor drive device. As a result thereof, it is possible to suppress torque pulsation in the motor 103 and, further, it is possible to improve the efficiency.

### Citation List

### Patent Literatures

Patent Literature 1: Unexamined Japanese Patent Publication No. 10-150795

### Summary of Invention

### Technical Problem

The motor drive device according to the conventional techniques is adapted to forward the phase of the output voltage from the inverter 104 for forcibly flowing an electric current from the inverter output to the motor 103, within the time interval within which the supply of a torque to the motor 103 from the single-phase AC power supply 101 is interrupted by the regenerated electric current, if the voltage applied to the inverter is lowered to below a predetermined level. Therefore, an electric current is forcibly flowed to the motor 103 from the inverter output at intervals of the half period of the power supply, which increases the effective value of the electric current in the motor 103, thereby increasing the motor loss. Particularly, in cases of a motor drive device adapted to provide motor outputs in such a way as to set the motor rotational speed to be higher in order to attain size reduction of the device, an increased amount of electric current is forcibly flowed to the motor, which has induced the problem of significant increases of the motor loss.

The patent application publication EP2034605A1 discloses a motor drive device comprising a full-wave rectification circuit to which a single-phase AC power supply is input, an inverter, a PWM control portion, a smoothing portion (2, 4) of a resonance frequency equal to or more than 40 times a frequency of the single-phase AC power supply, and a motor driven by the inverter.

It is an object of the present invention to provide a motor drive device with higher efficiency which is adapted to suppress system losses including motor losses.

### Solution to Problem

The present invention is defined in the independent claims. There is provided a motor drive device adapted to drive a motor with an AC output having a variable voltage and a variable frequency resulted from direct switching on an output created by full-wave rectification of an input from a single-phase AC power supply or on the single-phase AC power supply, wherein the motor used therein is adjusted to have such motor specifications (winding specifications) that the time interval within which the maximum value of the motor induced voltage is larger than the instantaneous value of the absolute voltage value of the single-phase AC power-supply voltage is substantially less than half the time interval of the period of the single-phase AC power supply, or the motor used therein is adjusted to have such motor specifications (winding specifications) that the effective voltage value of the motor induced voltage is substantially less than 70 % of the effective voltage value of the single-phase AC power supply, within a predetermined motor rotational-speed range. This can suppress the system loss including the motor loss, thereby providing a motor drive device with higher efficiency.

Novel characteristics of the invention are nothing more or less than those described particularly in the appended claims, and the present invention can be well understood and evaluated by reading the following detailed description with reference to the drawings, with respect to both its structures and contents and, further, with respect to other objects and characteristics.

### Advantageous Effects of Invention

According to the present invention, it is possible to provide a motor drive device with higher efficiency which is capable of suppressing system losses including motor losses due to regenerated electric curren ts.

### Brief Description of Drawings

Fig. 1 is a drawing schematically illustrating the structure of a motor drive device according to a first embodiment of the present invention.
Fig. 2 is a drawing illustrating the waveform of a motor induced voltage (a thin line) and the waveform of a full-wave rectified voltage (a thick line) in the motor drive device according to the first embodiment.
Fig. 3 is a drawing illustrating the waveforms at respective portions in the motor drive device according to the first embodiment.
Fig. 4 is a drawing illustrating the relationship between the energization-width ratio and the induced-voltage/power-supply-voltage ratio.
Fig. 5 is a drawing illustrating the change of the motor induced voltage with respect to the motor rotational speed, in the motor drive device according to the first embodiment.
Fig. 6 is a waveform diagram illustrating intermittent supply of a torque and continuous supply of a torque, in the motor drive device according to the first embodiment.
Fig. 7 is a drawing illustrating the change of a motor electric current with respect to the motor induced voltage, in the motor drive device.
Fig. 8 is a drawing schematically illustrating supply of a voltage to an inverter, in the motor drive device.
Fig. 9 is a drawing illustrating the change of the inverter loss with respect to the motor induced voltage, in the motor drive device according to the first embodiment.
Fig. 10 is a drawing illustrating the change of the motor induced voltage with respect to the number of motor windings, in the motor drive device according to the first embodiment.
Fig. 11 is a drawing illustrating the change of the motor winding resistance with respect to the motor induced voltage, in the motor drive device according to the first embodiment.
Fig. 12 is a drawing illustrating the change of the motor loss (copper loss) with respect to the motor induced voltage, in the motor drive device according to the first embodiment.
Fig. 13 is a drawing illustrating the change of the system loss with respect to the motor induced voltage, in the motor drive device according to the first embodiment.
Fig. 14 is a drawing schematically illustrating the structure of a motor drive device according to another embodiment of the present invention.
Fig. 15 is a drawing illustrating waveforms at respective portions in the motor drive device having the structure illustrated in Fig. 14, according to the present invention.
Fig. 16 is the drawing schematically illustrating the structure of the motor drive device according to the conventional techniques.

### Description of Embodiments

A first invention is configured that a motor drive device comprises a full-wave rectification circuit to which a single-phase AC power supply is inputted, an inverter for converting DC electric power outputted from the full-wave rectification circuit into AC electric power, a control portion for performing PWM drive control on the inverter, a smoothing portion which is adapted to have a resonance frequency equal to or more than 40 times a frequency of the single-phase AC power supply and, further, is constituted by a reactor placed in a line connecting the inverter to the single-phase AC power supply, and a capacitor connected, in parallel, to an input side of the inverter, and a motor adapted to be driven by the inverter,
wherein the motor comprises an IPM motor having a specification adjusted in terms of an induced voltage and a winding resistance in the motor, in such a way as to reduce a time interval within which supply of a torque to the motor from the single-phase AC power supply is interrupted by a regenerated electric current, within a predetermined motor-rotational-speed range.

The motor drive device having the aforementioned structure according to the first invention forms the motor drive device with higher efficiency which is capable of suppressing the motor loss.

A second invention may be configured that, in particular, the motor in the first invention has a winding specification adjusted such that a time interval within which a maximum value of the induced voltage in the motor is larger than an instantaneous value of the absolute voltage value of the single-phase AC power supply voltage is less than half the period of the single-phase AC power supply, within a predetermined motor-rotational-speed range.

With the motor drive device having the aforementioned structure according to the second invention, it is possible to shorten the time interval within which the supply of the torque to the motor from the single-phase AC power supply is interrupted by the regenerated electric current, thereby suppressing the motor loss. Further, with the motor drive device according to the second invention, it is possible to suppress the regenerated electric current, thereby suppressing the loss in the inverter, which is caused by the regenerated electric current passing through the inverter.

A third invention may be configured that, in particular, the motor in the first invention has a winding specification adjusted such that an effective voltage value of the induced voltage in the motor is less than 70 % of an effective voltage value of the single-phase AC power supply, within a predetermined motor-rotational-speed range.

With the motor drive device having the aforementioned structure according to the third invention, it is possible to shorten the time interval within which the supply of the torque to the motor from the single-phase AC power supply is interrupted by the regenerated electric current, thereby suppressing the motor loss. Further, with the motor drive device according to the third invention, it is possible to suppress the regenerated electric current, thereby suppressing the loss in the inverter, which is caused by the regenerated electric current passing through the inverter.

A fourth invention may be configured that, in particular, the motor in the first invention has a winding specification adjusted to minimize the sum of an inverter loss and the product of the motor winding resistance and the square of a motor effective electric-current value (the motor loss), within a predetermined motor-rotational-speed range, wherein the motor effective electric-current value varies along with the increase and decrease of a regeneration time interval which occurs around a zero cross of the single-phase AC power supply, and the motor winding resistance varies with the number of windings and the winding diameter in case of the motor having a constant amount of winding copper.

With the motor drive device having the aforementioned structure according to the fourth invention, it is possible to shorten the time interval within which the supply of the torque to the motor from the single-phase AC power supply is interrupted by the regenerated electric current, thereby suppressing the loss in the entire system.

A fifth invention may be configured that, in particular, the motor in the first invention has a winding specification adjusted to cause the sum of an inverter loss and the product of the motor winding resistance and the square of a motor effective electric-current value (the motor loss) to be less than 1.1 times a minimum value thereof, within a predetermined motor-rotational-speed range, wherein the motor effective electric-current value varies along with the increase and decrease of a regeneration time interval which occurs around a zero cross of the single-phase AC power supply, and the motor winding resistance varies with the number of windings and the winding diameter in case of the motor having a constant amount of winding copper.

With the motor drive device having the aforementioned structure according to the fifth invention, it is possible to shorten the time interval within which the supply of the torque to the motor from the single-phase AC power supply is interrupted by the regenerated electric current, thereby suppressing the loss in the entire system.

A sixth invention may be configured that a motor drive device comprises a single-phase AC power supply, a motor, a group of bidirectional switches which are placed between the single-phase AC power supply and the motor and are adapted to directly perform switching on an AC voltage, and a control portion for performing PWM drive control on the bidirectional switches which form the group of the bidirectional switches,
wherein the motor comprises an IPM motor having a specification adjusted in terms of an induced voltage and a winding resistance in the motor, to reduce a time interval within which supply of a torque to the motor from the single-phase AC power supply is interrupted by a regenerated electric current, within a predetermined motor-rotational-speed range.

With the motor drive device having the aforementioned structure according to the sixth invention, it is possible to substantially eliminate the time interval within which the supply of the torque to the motor from the single-phase AC power supply is interrupted by the regenerated electric current. Further, with the motor drive device according to the sixth invention, it is possible to suppress the regenerated electric current, thereby suppressing the loss in the inverter, which is caused by the regenerated electric current passing through the inverter.

A seventh invention may be configured that, in particular, the motor in the sixth invention has a winding specification adjusted such that a time interval within which a maximum value of the induced voltage in the motor is larger than an instantaneous value of the absolute voltage value of the single-phase AC power supply voltage is less than half the period of the single-phase AC power supply, within a predetermined motor-rotational-speed range.

With the motor drive device having the aforementioned structure according to the seventh invention, it is possible to shorten the time interval within which the supply of the torque to the motor from the single-phase AC power supply is interrupted by the regenerated electric current, thereby suppressing the motor loss. Further, with the motor drive device according to the seventh invention, it is possible to suppress the regenerated electric current, thereby suppressing the loss in the inverter, which is caused by the regenerated electric current passing through the inverter.

An eighth invention may be configured that, in particular, the motor in the sixth invention has a winding specification adjusted such that an effective voltage value of the induced voltage in the motor is less than 70 % of an effective voltage value of the single-phase AC power supply, within a predetermined motor-rotational-speed range.

With the motor drive device having the aforementioned structure according to the eighth invention, it is possible to shorten the time interval within which the supply of the torque to the motor from the single-phase AC power supply is interrupted by the regenerated electric current, thereby suppressing the motor loss. Further, with the motor drive device according to the eighth invention, it is possible to suppress the regenerated electric current, thereby suppressing the loss in the inverter, which is caused by the regenerated electric current passing through the inverter.

A ninth invention may be configured that, in particular, the motor in the sixth invention has a winding specification adjusted to minimize the sum of a loss in the group of the bidirectional switches and the product of the motor winding resistance and the square of a motor effective electric-current value (the motor loss), within a predetermined motor-rotational-speed range, wherein the motor effective electric-current value varies along with the increase and decrease of a regeneration time interval which occurs around a zero cross of the single-phase AC power supply, and the motor winding resistance varies with the number of windings and the winding diameter in case of the motor having a constant amount of winding copper.

With the motor drive device having the aforementioned structure according to the ninth invention, it is possible to shorten the time interval within which the supply of the torque to the motor from the single-phase AC power supply is interrupted by the regenerated electric current, thereby suppressing the loss in the entire system.

A tenth invention may be configured that, in particular, the motor in the sixth invention has a winding specification adjusted to cause the sum of a loss in the group of the bidirectional switches and the product of the motor winding resistance and the square of a motor effective electric-current value (the motor loss) to be less than 1.1 times a minimum value thereof, within a predetermined motor-rotational-speed range, wherein the motor effective electric-current value varies along with the increase and decrease of a regeneration time interval which occurs around a zero cross of the single-phase AC power supply, and the motor winding resistance varies with the number of windings and the winding diameter in case of the motor having a constant amount of winding copper.

With the motor drive device having the aforementioned structure according to the tenth invention, it is possible to shorten the time interval within which the supply of the torque to the motor from the single-phase AC power supply is interrupted by the regenerated electric current, thereby suppressing the loss in the entire system.

An eleventh invention may be configured that, in particular, the motor in the sixth invention comprises a synchronous reluctance motor employing no permanent magnet or only an auxiliary permanent magnet, in a rotor.

With the motor drive device having the aforementioned structure according to the eleventh invention, it is possible to substantially eliminate the time interval within which the supply of the torque to the motor from the single-phase AC power supply is interrupted by the regenerated electric current. Further, with the motor drive device according to the eleventh invention, it is possible to suppress the regenerated electric current, thereby suppressing the loss in the inverter, which is caused by the regenerated electric current passing through the inverter.

A twelfth invention may be configured that, in particular, the motor according to any one of the first invention to the tenth invention comprises a ferrite magnet, as a magnet used in a rotor in the motor.

With the motor drive device having the aforementioned structure according to the twelfth invention, due to the use of the ferrite magnet as a magnet used in the rotor, it is possible to employ an inexpensive magnet having a smaller magnetic force, without employing an expensive magnet having a larger magnetic force, which is made of a rare metal and the like. Thus, with the motor drive device according to the twelfth invention, due to the use of the ferrite magnet, it is possible to shorten the time interval within which the supply of the torque to the motor from the single-phase AC power supply is interrupted by the regenerated electric current, thereby suppressing the motor loss. Further, with the motor drive device according to the twelfth invention, it is possible to suppress the regenerated electric current, thereby suppressing the loss in the inverter, which is caused by the regenerated electric current passing through the inverter.

Hereinafter, there will be described a preferred embodiment of a motor drive device according to the present invention, with reference to the accompanying drawings. In the following embodiments, the motor drive device will be described with respect to detailed structures, but the present invention is not limited to the structures in the following embodiments and also includes structures based on similar technical concepts.

### (First Embodiment)

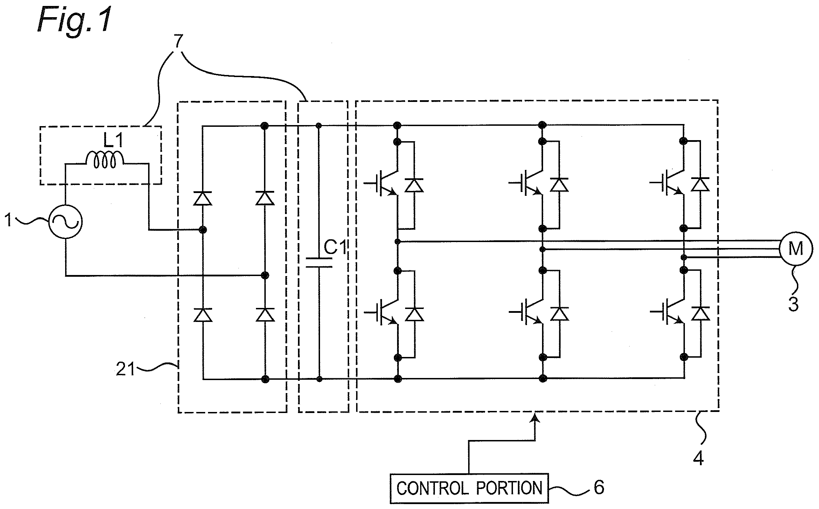

Fig. 1 is a drawing schematically illustrating the structure of a motor drive device according to a first embodiment of the present invention.

As illustrated in Fig. 1, the motor drive device according to the first embodiment includes a full-wave rectification circuit 21 constituted by a diode bridge or the like to which AC electric power is inputted from a single-phase AC power supply 1, an inverter 4 constituted by plural semiconductor switching devices for converting the DC electric power outputted from the full-wave rectification circuit 21 into desired AC electric power, a control portion 6 constituted by a microcomputer or the like for performing PWM drive control on the inverter 4, a smoothing portion 7 which is adapted to have a resonance frequency equal to or more than 40 times the frequency of the single-phase AC power supply 1 and, further, is constituted by a reactor placed in the line connecting the inverter 4 to the single-phase AC power supply 1, and a capacitor connected to the input side of the inverter 4 in parallel therewith, and a motor 3 adapted to be driven by the inverter 4. The motor 3 is adjusted in terms of the motor induced voltage and the motor-winding resistance, in order to suppress the increase of the system loss due to influences of the regenerated electric current, within a predetermined motor-rotational-speed range. The motor 3 is constituted by an interior permanent magnet motor (IPM motor) structured to include a rotor and magnets embedded therein.

Hereinafter, there will be described the motor drive device having the aforementioned structure according to the first embodiment, with respect to operations and effects thereof.

At first, in cases of employing a power supply with a frequency of 50 Hz as the single-phase AC power supply 1, the capacity L1 of the reactor and the capacitance C1 of the capacitor respectively, which form the smoothing portion 7, are set such that the resonance frequency fc=1/(2π×√(L1×C1)) is equal to or more than 40 times the frequency of the single-phase AC power supply 1, namely equal to or more than 2000 Hz. This is because the IEC standard defines up to 40th harmonics as harmonic components of AC power-supply electric currents. By determining the combination of the capacitor and the reactor as described above, it is possible to reduce harmonic components in the AC power-supply electric current for clearing the IEC standard.

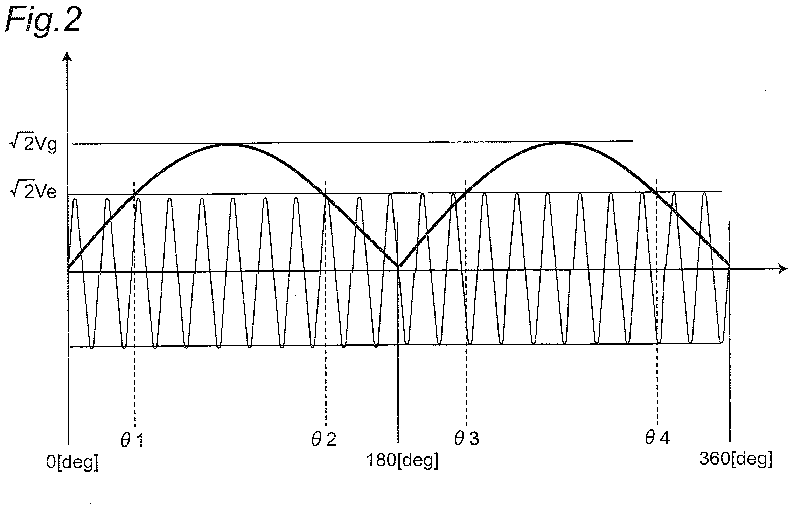

Therefore, for example, by employing a reactor and a capacitor having a reactance value L1 of 0.5 mH and a capacitance value C1 of 10 µF, respectively, it is possible to make the resonance frequency fc (nearly equal to 2250 Hz) higher than (40 × the frequency of the single-phase AC power supply) (= 2000 Hz). In cases where the reactor and the capacitor which form the smoothing portion 7 are set to have these values, there is a relationship as illustrated in Fig. 2 between the waveform of the induced voltage in the motor 3 and the waveform of the full-wave rectified voltage from the single-phase AC power supply 1 during driving the motor. Fig. 2 is a drawing illustrating the waveform of the motor induced voltage (a thin line) and the waveform of the full-wave rectified voltage (a thick line) in the motor drive device according to the first embodiment. Referring to Fig. 2, the vertical axis represents the voltage, while the horizontal axis, which is the time axis, represents the phase.

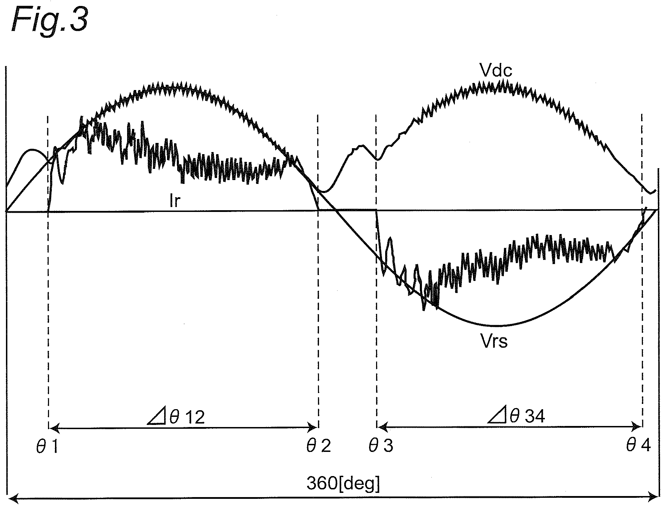

In this case, assuming that the effective value of the single-phase AC power-supply voltage is Vg, and the effective value of the motor induced voltage is Ve, the motor specifications are adjusted such that there is a magnitude relationship of Vg > Ve therebetween, in order to supply a torque to the motor 3 to be driven, from the single-phase AC power supply 1, within a motor-driving range (within a motor rotational-speed range). Further, outside the single-phase AC power-supply phase ranges of from θ1 to θ2 and from θ3 to θ4, within which the value of the full-wave rectified voltage from the single-phase AC power-supply voltage is larger than the maximum value (√2×Ve) of the motor induced voltage, the motor 3 serves as an electric generator. Therefore, the regenerated electric current from the motor 3 charges the capacitor in the smoothing portion 7. Accordingly, during driving the motor, the waveform Vrs of the voltage from the single-phase AC power supply 1, the waveform Ir of the electric current from the single-phase AC power supply 1, and the waveform Vdc of the voltage applied to the inverter are as illustrated in Fig. 3, for example. Fig. 3 is a drawing illustrating an example of the waveforms at respective portions in the motor drive device according to the first embodiment. Referring to Fig. 3, the vertical axis represents the voltage/current, while the horizontal axis, which is the time axis, represents the phase.

In cases where the capacitance of the capacitor in the smoothing portion 7 is smaller, such as 10 µF, a torque is not continuously supplied to the motor 3, and a torque is intermittently supplied to the motor 3 from the single-phase AC power supply 1 within an energization width Δθ (= Δθ12 + Δθ34 (see Fig. 3)). Hereinafter, there will be described the system loss during driving the motor in such states. In this case, "the system loss" refers to the total sum of the loss in the smoothing portion 7 (the converter loss), the inverter loss, and the motor loss.

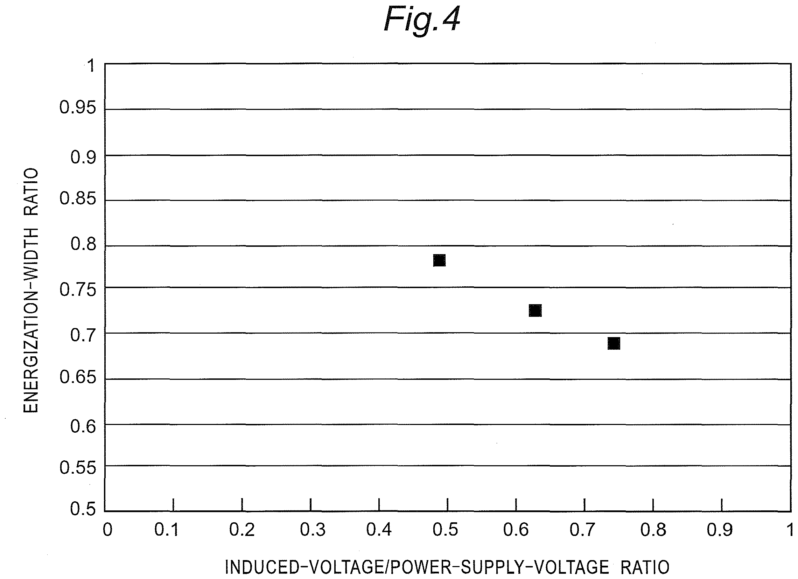

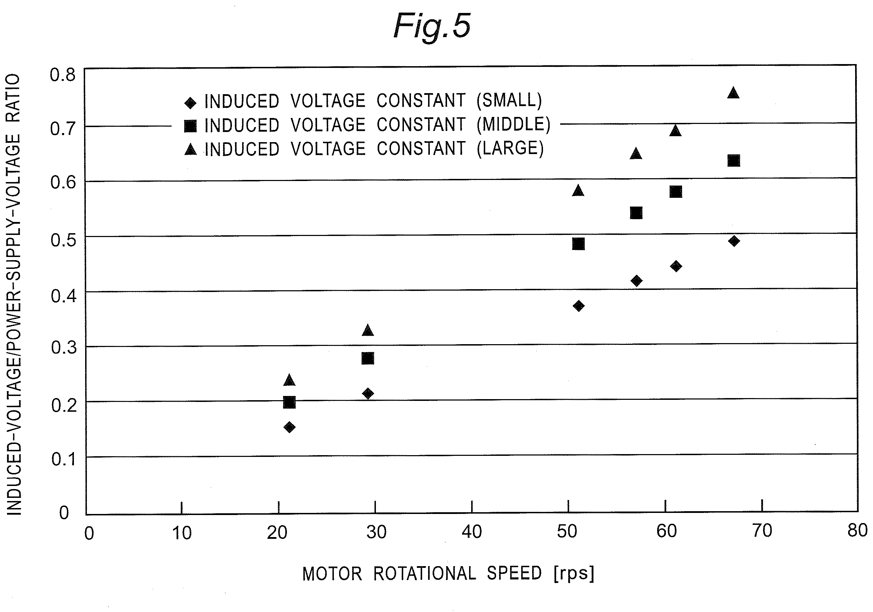

At first, as illustrated in Fig. 4, between the motor induced voltage and the energization width Δθ, there is such a relationship that the energization width Δθ is reduced as the motor induced voltage increases with respect to the single-phase AC power supply voltage. Fig. 4 is a drawing illustrating the change of the energization width with respect to the motor induced voltage in the motor drive device according to the first embodiment, indicating the relationship between the energization-width ratio and the induced-voltage/power-supply-voltage ratio. According to calculations, if the effective value Ve of the motor induced voltage comes to be larger than the effective value Vg of the single-phase AC power-supply voltage, this makes the energization width Δθ substantially zero, which makes it impossible to supply a torque to the motor 3. Further, the motor induced voltage increases as the rotational speed of the motor 3 is increased, as illustrated in Fig. 5.

Fig. 5 is a drawing illustrating the change of the motor induced voltage with respect to the motor rotational speed, in the motor drive device according to the first embodiment. Referring to Fig. 5, the vertical axis represents the induced-voltage/power-supply-voltage ratio, while the horizontal axis represents the motor rotational speed [rps]. The black-diamond marks ◆ illustrated in Fig. 5 represent a case where the induced-voltage constant is smaller, the black-square marks ■ represent a case where the induced voltage constant is middle, and the black-triangle marks ▲ represent a case where the induced voltage constant is larger. From the aforementioned characteristics, it can be seen that the energization width Δθ tends to be reduced as the rotational speed of the motor 3 is increased. Accordingly, in the motor drive device having a variable rotational speed, within a motor-rotational-speed range which exerts larger influences on the overall system efficiency, it is necessary to drive the motor in such a way as to suppress the system loss.

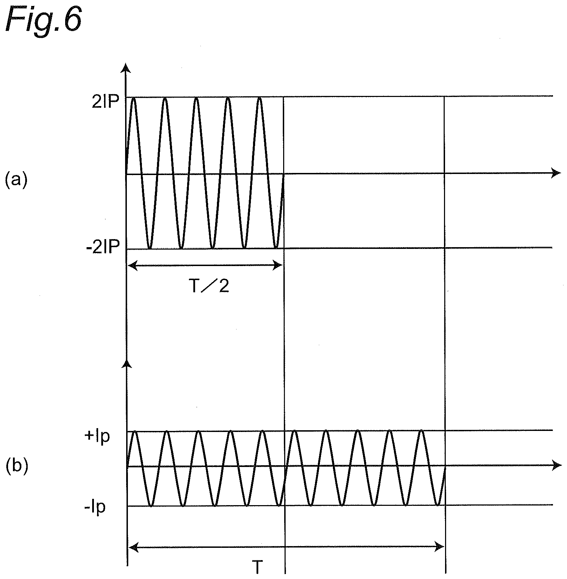

Here, in making a comparison between a case where a torque necessary for driving the motor, namely a necessary electric current therefor, is continuously supplied thereto, and a case where it is intermittently supplied thereto, the effective value thereof is made larger in the case where the necessary electric current is intermittently supplied thereto. Fig. 6 illustrates a case (b) where a necessary electric current (torque) is continuously supplied thereto within a time interval of the period T, and a case (a) where the necessary electric current (torque) is supplied thereto within a time interval of the half period T/2. In this case, by intermittently supplying the necessary electric current, the electric-current effective value is increased to √2 times. By intermittently supplying the necessary electric current thereto, as described above, the effective value thereof is made larger.

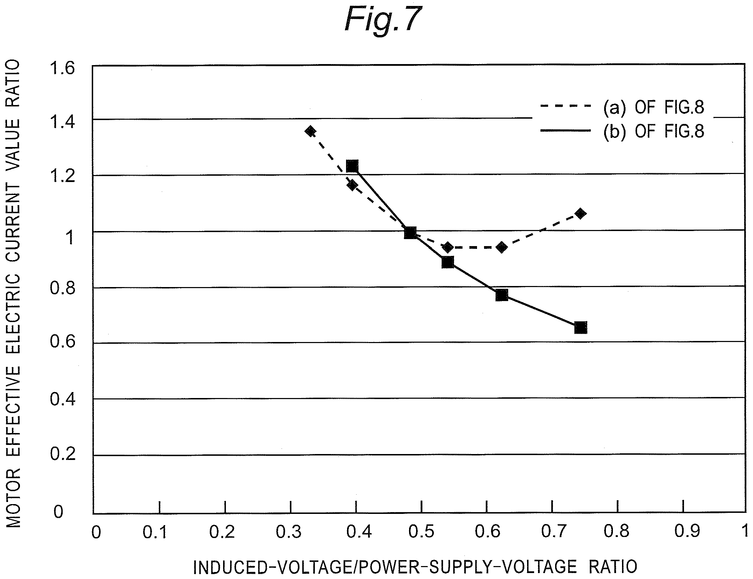

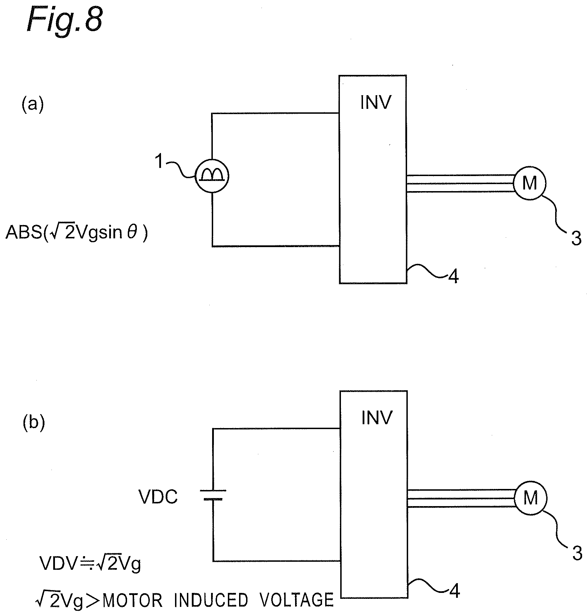

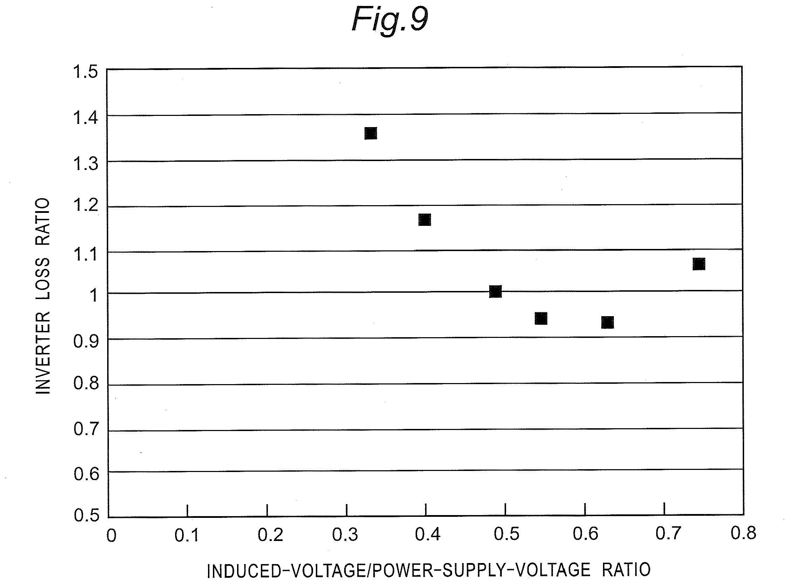

Considering the aforementioned facts, there is a relationship between the motor induced voltage and the motor effective electric current, as illustrated in Fig. 7. Referring to Fig. 7, the vertical axis represents the motor effective electric-current value ratio, while the horizontal axis represents the induced-voltage/power-supply-voltage ratio. As represented by a solid line in Fig. 7, in an ordinary motor drive device as illustrated in (b) of Fig. 8, the motor effective electric-current value decreases as the motor induced voltage increases with respect to the single-phase AC power supply voltage. However, in cases where a full-wave rectified waveform from the single-phase AC power supply 1 is applied to the inverter 4 as illustrated in (a) of Fig. 8, as represented by a broken line in Fig. 7, there is caused an area within which, as the motor induced voltage increases, the motor effective electric-current value is increased, due to influences of the energization width Δθ caused by the regenerated electric current. Therefore, the inverter loss with respect to the motor specification (the motor induced voltage) is as illustrated in Fig. 9. Referring to Fig. 9, the vertical axis represents the inverter-loss ratio, while the horizontal axis represents the induced-voltage / power- supply-voltage ratio.

The present inventers have found that, in the motor drive device according to the first embodiment, it is possible to suppress the inverter loss, by employing the motor 3 adjusted in terms of the motor induced voltage, such that the time interval within which the supply of a torque to the motor 3 is interrupted by the regenerated electric current falls within the range of about 20 % to 50 % of the period of the power supply, namely the time interval within which a torque is supplied to the motor 3 falls within the range of about 50 % to 80 % of the period of the power supply, or such that the motor induced voltage falls within the range of 30 % to 70 % of the single-phase AC power-supply voltage.

Accordingly, in the motor drive device according to the first embodiment, it is also possible to employ an IPM motor adjusted in terms of motor (winding) specifications such that, within a predetermined motor-rotational-speed range, the time interval within which the maximum value of the motor induced voltage is larger than the instantaneous value of the absolute voltage value of the single-phase AC power-supply voltage is less than half the period of the single-phase AC power-supply, in order to reduce the inverter loss. Further, as the motor 3, it is also possible to employ an IPM motor adjusted in terms of motor (winding) specifications such that, within a predetermined motor-rotational-speed range, the effective voltage value of the motor induced voltage is less than 70 % of the effective voltage value of the single-phase AC power supply 1.

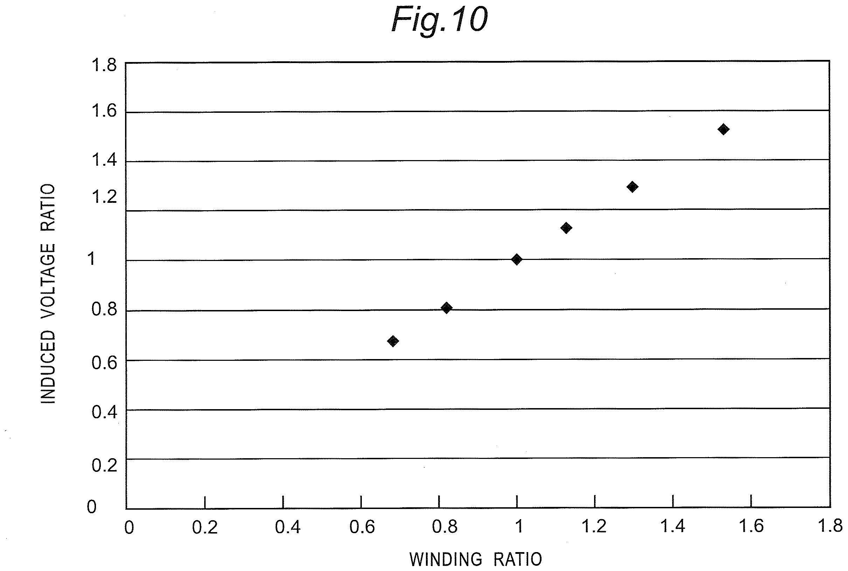

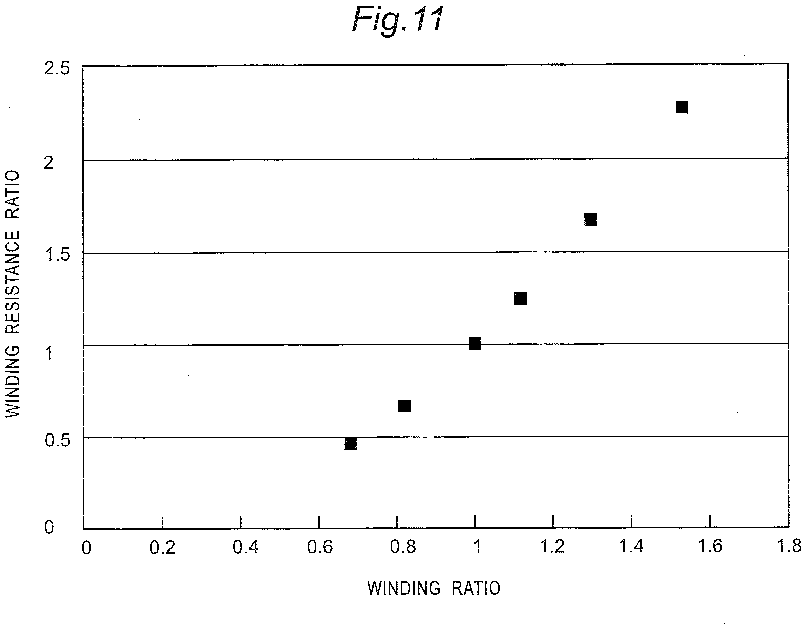

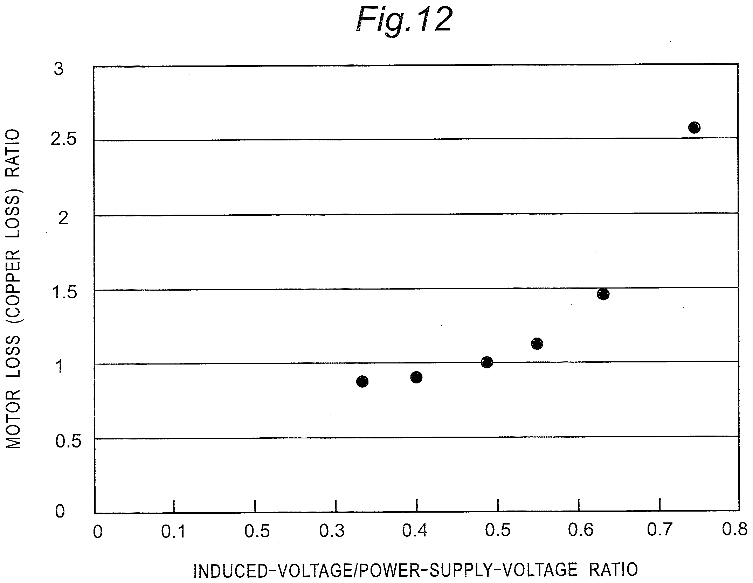

Next, the motor loss will be described. Assuming that the motor 3 includes a constant amount of magnets and a constant amount of a winding material, there is a relationship as illustrated in Fig. 10 between the number of windings and the motor induced voltage. Referring to Fig. 10, the vertical axis represents the induced-voltage ratio, while the horizontal axis represents the winding ratio. As illustrated in Fig. 10, as the number of windings is increased, the flux linkage increases, thereby increasing the motor induced voltage along therewith. Further, between the number of windings and the winding resistance, there is a relationship as illustrated in Fig. 11. Referring to Fig. 11, the vertical axis represents the winding resistance ratio, while the horizontal axis represents the winding ratio. As illustrated in Fig. 11, as the number of windings is increased, the wire diameter of the windings is decreased and the winding length is increased, thereby increasing the winding resistance along therewith. Since the motor electric-current effective value is changed with respect to the motor induced voltage as represented by the curved line indicated by the broken line in Fig. 7, the motor loss (copper loss) caused by the winding resistance with respect to the motor specification (the motor induced voltage) is as illustrated in Fig. 12. Referring to Fig. 12, the vertical axis represents the motor loss (copper loss) ratio, while the horizontal axis represents the induced-voltage / power- supply-voltage ratio.

The present inventers have found that, in the motor drive device according to the first embodiment, it is possible to suppress the motor loss (copper loss), by employing the motor 3 adjusted in terms of the motor induced voltage, such that the time interval within which the supply of a torque to the motor 3 is interrupted by the regenerated electric current falls within the range of about 20 % to 50 % of the period of the power supply, namely the time interval within which a torque is supplied to the motor 3 falls within the range of about 50 % to 80 % of the period of the power supply, or such that the motor induced voltage falls within the range of 30 % to 70 % of the single-phase AC power-supply voltage.

Accordingly, in the motor drive device according to the first embodiment, it is also possible to employ an IPM motor adjusted in terms of motor (winding) specifications such that, within a predetermined motor-rotational-speed range, the time interval within which the maximum value of the motor induced voltage is larger than the instantaneous value of the absolute voltage value of the single-phase AC power-supply voltage is less than half the period of the single-phase AC power-supply, in order to reduce the motor loss (copper loss). Further, as the motor 3, it is also possible to employ an IPM motor adjusted in terms of motor (winding) specifications such that, within a predetermined motor-rotational-speed range, the effective voltage value of the motor induced voltage is less than 70 % of the effective voltage value of the single-phase AC power supply 1.

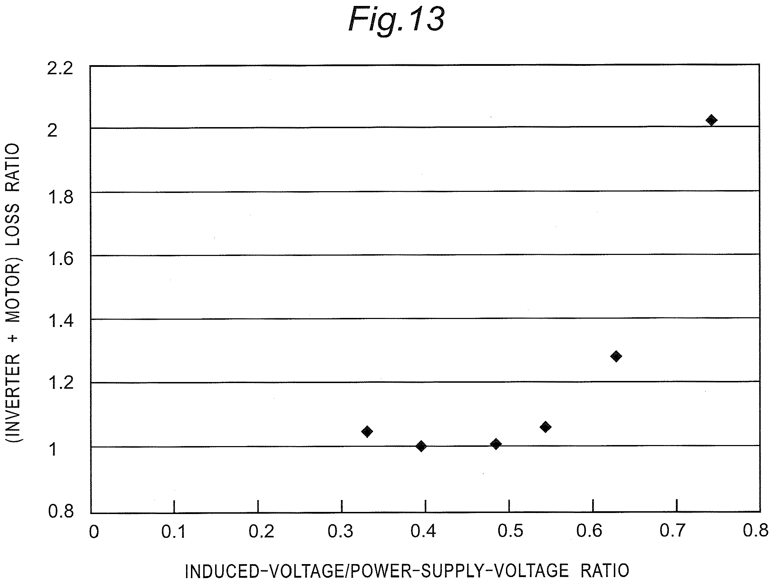

In the motor drive device according to the first embodiment, the value of the system loss corresponds to the sum of the inverter loss, the motor loss and the converter loss, and it is possible to substantially minimize the loss in the converter, through adjustments in such a way as to minimize the sum of the inverter loss and the motor loss. Therefore, the sum of the inverter loss and the motor loss illustrated in Fig. 13 can be regarded as the system loss. Referring to Fig. 13, the vertical axis represents the sum of the inverter loss and the motor loss (the loss ratio), while the horizontal axis represents the induced-voltage / power- supply-voltage ratio.

As described above, the present inventers employ the motor 3 adjusted in terms of the motor specifications (the motor induced voltage) such that the time interval within which the supply of a torque to the motor 3 is interrupted by the regenerated electric current falls within the range of about 20 % to 50 % of the period of the power supply, namely the time interval within which a torque is supplied to the motor 3 falls within the range of about 50 % to 80 % of the period of the power supply, or such that the motor induced voltage falls within the range of 30 % to 70 % of the single-phase AC power-supply voltage and, further, such that the sum of the inverter loss and the product of the square of the motor effective electric-current value and the winding resistance of the motor 3 (the motor loss) is minimized and, preferably, is less than 1.1 times a minimum value thereof, which can suppress the inverter loss and the motor loss, thereby substantially minimizing the system loss.

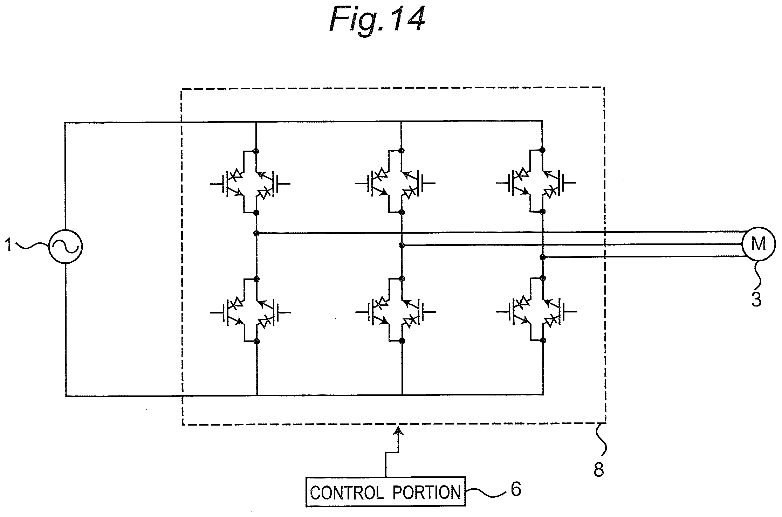

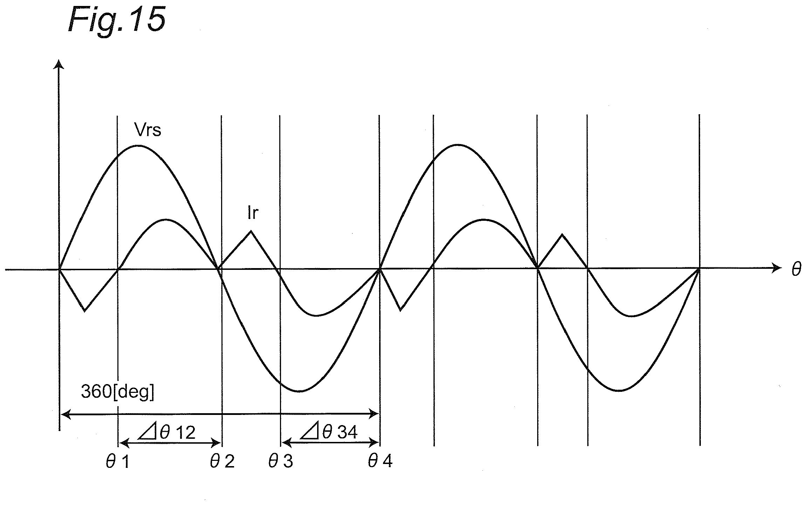

Further, in the first embodiment, there has been described the motor drive device employing the inverter 4 which is adapted to perform switching on the output from the single-phase AC power supply 1 which has been subjected to the full-wave rectification by the full-wave rectification circuit 21, for providing an AC voltage with an arbitrary amplitude and frequency, which is illustrated in Fig. 1. However, it is also possible to similarly conceive a motor drive device adapted to drive a motor, through a group of bidirectional switches 8 for directly performing switching on a single-phase AC power supply 1 for providing an AC voltage with an arbitrary amplitude and frequency, without using a full-wave rectification circuit 21, as illustrated in Fig. 14. In this case, the energization width Δθ is determined by the waveform of the induced voltage in the motor 3 and the waveform of the single-phase AC power-supply voltage during driving the motor, as illustrated in Fig. 15.

As described above, by employing the motor 3 provided in consideration of suppression of the regenerated electric current, it is possible to reduce the system loss. Further, although an ordinary IPM motor can be employed for providing effects, as a matter of course, it is also possible to employ a motor 3 employing inexpensive ferrite magnets with a lower induced-voltage constant, which facilitates suppression of the regenerated electric current, and, further, it is also possible to employ a synchronous reluctance motor employing no magnet or only auxiliary magnets, in order to realize a more inexpensive motor drive device, while suppressing the increase of the system loss.

Further, in the first embodiment, ferrite magnets are employed in the motor, as magnets used in the rotor. By employing such ferrite magnets as magnets used in the rotor, it is possible to reduce the time interval within which the supply of a torque to the motor from the single-phase AC power supply is interrupted by the regenerated electric current, thereby suppressing the motor loss, due to the use of such inexpensive magnets having smaller magnetic forces, without using an expensive magnet having a larger magnetic force which is made of a rare metal and the like. Further, since the regenerated electric current is suppressed, it is possible to suppress the loss in the inverter, which is caused by the regenerated electric current passing through the inverter.

As described above, with the present invention, due to the use of the motor 3 having such specifications as to take account of the energization width Δθ caused by the regenerated electric current, it is possible to realize a system with excellent efficiency, under restricted conditions where the amount of magnets and the amount of winding material in the motor 3 are specified.

While the invention has been described with respect to the preferred embodiment in some detail, the contents disclosed herein in the preferred embodiment can be changed in details of structures as a matter of course, and changes in combinations and orders of respective components can be realized without departing from the scope and the spirits of the invention claimed herein.

### Industrial Applicability

As described above, in comparison with conventional motor drive devices, the present invention can realize system efficiency improvement and size reduction due to increases of the motor rotational speed, by employing an inexpensive motor including no rare earth materials such as rare-earth elements. Therefore, the present invention can be applied to various types of motor drive devices including those for driving compressors in air conditioners and refrigerators, and the like.

### Reference Signs List

- 1: Single-phase AC power supply
- 2: Rectification circuit
- 3: Motor
- 4: Inverter
- 6: Control portion
- 7: Smoothing portion
- 8: Group of bidirectional switches
- 21: Full-wave rectification circuit

## Claims

1. A motor drive device comprising:
a full-wave rectification circuit (21) to which a single-phase AC power supply (1) is inputted;
an inverter (4) for converting DC electric power outputted from the full-wave rectification circuit (21) into AC electric power;
a control portion (6) for performing PWM drive control on the inverter (4);
a smoothing portion (7) which is adapted to have a resonance frequency equal to or more than 40 times a frequency of the single-phase AC power supply (1) and, further, is constituted by a reactor placed in a line connecting the inverter (4) to the single-phase AC power supply (1), and a capacitor connected, in parallel, to an input side of the inverter (4); and
a motor (3) adapted to be driven by the inverter (4),
**characterized in that**
the motor (3) comprises an IPM motor having a winding specification adjusted to provide an effective value of the motor induced voltage (Vₑ) to be smaller than an effective value of the voltage (V_{g}) of the single-phase AC power supply (1) within a motor-rotational-speed range (θ₁ - θ₂), and
the winding specification is adjusted to provide a time interval (θ₂ - θ₃) within which a maximum value of the induced voltage (Vₑ) in the motor (3) is larger than an instantaneous value of the absolute voltage value (V_{g}) of the single-phase AC power supply voltage to be less than half the period of the single-phase AC power supply (1) within a predetermined motor-rotational-speed range.

2. The motor drive device according to claim 1, wherein
the winding specification adjusted provides an effective voltage value of the induced voltage in the motor (3) which is less than 70 % of an effective voltage value of the single-phase AC power supply (1), within a predetermined motor-rotational-speed range.

3. The motor drive device according to claim 1, wherein
the winding specification is adjusted to provide a minimized sum of an inverter (4) loss and the product of a motor winding resistance and the square of a motor effective electric-current value, the motor loss, within a predetermined motor-rotational-speed range, wherein the motor effective electric-current value varies along with the increase and decrease of a regeneration time interval which occurs around a zero cross of the single-phase AC power supply (1), and the motor winding resistance varies with the number of windings and the winding diameter in case of the motor (3) having a constant amount of winding copper.

4. The motor drive device according to claim 1, wherein
the winding specification is adjusted to provide the sum of an inverter (4) loss and the product of a motor winding resistance and the square of a motor effective electric-current value, the motor loss, to be less than 1.1 times a minimum value thereof, within a predetermined motor-rotational-speed range, wherein the motor effective electric-current value varies along with the increase and decrease of a regeneration time interval which occurs around a zero cross of the single-phase AC power supply (1), and the motor winding resistance varies with the number of windings and the winding diameter in case of the motor (3) having a constant amount of winding copper.

5. A motor drive device comprising a single-phase AC power supply (1), a motor (3), a group of bidirectional switches (8) which are placed between the single-phase AC power supply (1) and the motor (3) and are adapted to directly perform switching on an AC voltage, and a control portion (6) for performing PWM drive control on the bidirectional switches which form the group of the bidirectional switches (8),
wherein the motor (3) comprises an IPM motor having a winding specification adjusted to provide an effective value of the motor induced voltage (Vₑ) to be smaller than an effective value of the voltage (V_{g}) of the single-phase AC power supply (1) within a motor-rotational-speed range (θ₁ - θ₂)
**characterized in that**
the winding specification is adjusted to provide a time interval (θ₂ - θ₃) within which a maximum value of the induced voltage (Vₑ) in the motor (3) is larger than an instantaneous value of the absolute voltage value (V_{g}) of the single-phase AC power supply voltage to be less than half the period of the single-phase AC power supply (1) within a predetermined motor-rotational-speed range.

6. The motor drive device according to claim 5, wherein
the winding specification is adjusted to provide an effective voltage value of the induced voltage in the motor (3) which is less than 70 % of an effective voltage value of the single-phase AC power supply (1), within a predetermined motor-rotational-speed range.

7. The motor drive device according to claim 5, wherein
the winding specification is adjusted to provide a minimized sum of a loss in the group of the bidirectional switches (8) and the product of a motor winding resistance and the square of a motor effective electric-current value, the motor loss, within a predetermined motor-rotational-speed range, wherein the motor effective electric-current value varies along with the increase and decrease of a regeneration time interval which occurs around a zero cross of the single-phase AC power supply (1), and the motor winding resistance varies with the number of windings and the winding diameter in case of the motor (3) having a constant amount of winding copper.

8. The motor drive device according to claim 5, wherein
the winding specification is adjusted to provide the sum of a loss in the group of the bidirectional switches (8) and the product of a motor winding resistance and the square of a motor effective electric-current value, the motor loss, to be less than 1.1 times a minimum value thereof, within a predetermined motor-rotational-speed range, wherein the motor effective electric-current value varies along with the increase and decrease of a regeneration time interval which occurs around a zero cross of the single-phase AC power supply (1), and the motor winding resistance varies with the number of windings and the winding diameter in case of the motor (3) having a constant amount of winding copper.

9. The motor drive device according to claim 1 or 5, wherein
the motor (3) comprises a synchronous reluctance motor employing no permanent magnet or only an auxiliary permanent magnet, in a rotor.

10. The motor drive device according to any one of claims 1 to 8, wherein
the motor (3) comprises a ferrite magnet, as a magnet used in a rotor in the motor.

## Patentansprüche

1. Motorantriebsvorrichtung enthaltend:
einen Vollwellengleichrichterschaltkreis (21), in den von einer einphasigen Wechselstromquelle (1) eingespeist wird;
einen Inverter (4), um vom Vollwellengleichrichterschaltkreis (21) ausgegebenen Gleichstrom in Wechselstrom umzuwandeln;
ein Regelelement (6), um PWM-Antriebsregelung auf den Inverter (4) anzuwenden;
ein Glättungselement (7) das eingerichtet ist, eine Resonanzfrequenz größer oder gleich des Vierzigfachen einer Frequenz der einphasigen Wechselstromquelle (1) aufzuweisen, und welches ferner durch eine Drosselspule, die in einer den Inverter (4) mit der einphasigen Wechselstromquelle (1) verbindenden Leitung angeordnet ist, und einem parallel mit einer Eingangsseite des Inverters (4) verbundenen Kondensator gebildet wird; und
einen Motor (3), eingerichtet, um vom Inverter (4) angetrieben zu werden,
**dadurch gekennzeichnet, dass**
der Motor (3) einen IPM-Motor enthält, dessen Wicklungsspezifikation ausgelegt ist, um innerhalb eines Motordrehzahlbereichs (*Θ*₁ - *Θ*₂) einen Effektivwert der motorinduzierten Spannung (*Vₑ*) bereitzustellen, der kleiner ist als der Effektivwert der Spannung (*V_{g}*) der einphasigen Wechselstromquelle (1), und
die Wicklungsspezifikation ausgelegt ist, innerhalb eines vorbestimmten Motordrehzahlbereichs, ein Zeitintervall (*Θ*₂ - *Θ*₃) bereitzustellen, das kleiner ist als die halbe Periode der einphasigen Wechselstromquelle (1), innerhalb dessen ein Maximalwert der induzierten Spannung (*Vₑ*) im Motor (3) größer ist als ein Momentanwert des absoluten Spannungswerts (*V_{g}*) der einphasigen Wechselstromquelle (1).

2. Motorantriebsvorrichtung gemäß Anspruch 1, wobei
die Wicklungsspezifikation ausgelegt ist, innerhalb eines vorbestimmten Motordrehzahlbereichs einen effektiven Spannungswert der induzierten Spannung im Motor (3) aufzuweisen, der kleiner ist als 70% eines effektiven Spannungswerts der einphasigen Wechselstromquelle (1).

3. Motorantriebsvorrichtung gemäß Anspruch 1, wobei
die Wicklungsspezifikation ausgelegt ist, innerhalb eines vorbestimmten Motordrehzahlbereichs eine minimierte Summe eines Verlusts des Inverters (4) und des Produkts aus einem Motorwicklungswiderstand und dem Quadrat eines motoreffektiven Stromstärkewerts, des Motorverlusts, aufzuweisen, wobei der motoreffektive Stromstärkewert mit der Zunahme und Abnahme eines Regenerationszeitintervalls, welches um den Nulldurchgang der einphasigen Wechselstromquelle (1) auftritt, variiert, und der Motorwicklungswiderstand mit der Anzahl an Wicklungen und dem Wicklungsdurchmesser variiert, für den Fall dass der Motor (3) eine konstante Menge Wicklungskupfer enthält.

4. Motorantriebsvorrichtung nach Anspruch 1, wobei
die Wicklungsspezifikation so ausgelegt ist, dass innerhalb eines vorbestimmten Motordrehzahlbereichs die Summe eines Verlusts des Inverters (4) und des Produkts aus einem Motorwicklungswiderstand und dem Quadrat eines motoreffektiven Stromstärkewerts, des Motorverlusts, kleiner ist als das 1,1-Fache eines Minimalwertes davon, wobei der motoreffektive Stromstärkewert mit der Zunahme und Abnahme eines Regenerationszeitintervalls, welches um den Nulldurchgang der einphasigen Wechselstromquelle (1) auftritt, variiert, und der Motorwicklungswiderstand mit der Anzahl an Wicklungen und dem Wicklungsdurchmesser variiert, für den Fall dass der Motor (3) eine konstante Menge Wicklungskupfer enthält.

5. Eine Motorantriebsvorrichtung, der eine einphasige Wechselstromquelle (1), einen Motor (3), eine Gruppe von bidirektionalen Schaltern (8), die zwischen der einphasigen Wechselstromquelle (1) und dem Motor (3) angeordnet sind und ausgelegt sind, das Einschalten einer Wechselspannung direkt auszuführen, und ein Regelelement (6) zum Ausüben von PWM-Antriebsregelung auf die bidirektionalen Schalter, die die Gruppe von bidirektionalen Schaltern (8) bilden, enthält;
wobei der Motor (3) einen IPM Motor enthält, der eine Wicklungsspezifikation aufweist, die ausgelegt ist, innerhalb eines Motordrehzahlbereichs (*Θ*₁ - *Θ*₂) einen Effektivwert der motorinduzierten Spannung (*Vₑ*) aufzuweisen, der kleiner ist als ein Effektivwert der Spannung (*V_{g}*) der einphasigen Wechselstromquelle (1),
**dadurch gekennzeichnet, dass**
die Wicklungsspezifikation ausgelegt ist, innerhalb eines vorbestimmten Motordrehzahlbereichs ein Zeitintervall (*Θ*₂ - *Θ*₃) bereitzustellen, das kleiner ist als die halbe Periode der einphasigen Wechselstromquelle (1), innerhalb dessen ein Maximalwert der induzierten Spannung (*Vₑ*) im Motor (3) größer ist als ein Momentanwert des absoluten Spannungswerts (*V_{g}*) der einphasigen Wechselstromquelle (1).

6. Motorantriebsvorrichtung nach Anspruch 5, wobei
die Wicklungsspezifikation ausgelegt ist, innerhalb eines vorbestimmten Motordrehzahlbereichs einen effektiven Spannungswert der induzierten Spannung im Motor (3) aufzuweisen, der kleiner ist als 70% eines effektiven Spannungswertes der einphasigen Wechselstromquelle (1).

7. Motorantriebsvorrichtung nach Anspruch 5, wobei
die Wicklungsspezifikation ausgelegt ist, innerhalb eines vorbestimmten Motordrehzahlbereichs eine minimierte Summe eines Verlusts in der Gruppe der bidirektionalen Schalter (8) und des Produkts aus einem Motorwicklungswiderstand und dem Quadrat eines motoreffektiven Stromstärkewerts, des Motorverlusts, aufzuweisen, wobei der motoreffektive Stromstärkewert mit der Zunahme und Abnahme eines Regenerationszeitintervalls, welches um den Nulldurchgang der einphasigen Wechselstromquelle (1) auftritt, variiert, und der Motorwicklungswiderstand mit der Anzahl an Wicklungen und dem Wicklungsdurchmesser variiert, für den Fall dass der Motor (3) eine konstante Menge Wicklungskupfer enthält.

8. Motorantriebsvorrichtung nach Anspruch 5, wobei,
die Wicklungsspezifikation so ausgelegt ist, dass innerhalb eines vorbestimmten Motordrehzahlbereichs die Summe eines Verlusts in der Gruppe der bidirektionalen Schalter (8) und des Produkts aus einem Motorwicklungswiderstand und dem Quadrat eines motoreffektiven Stromstärkewerts, des Motorverlusts, kleiner ist als das 1,1-Fache eines Minimalwertes davon, wobei der motoreffektive Stromstärkewert mit der Zunahme und Abnahme eines Regenerationszeitintervalls, welches um den Nulldurchgang der einphasigen Wechselstromquelle (1) auftritt, variiert, und der Motorwicklungswiderstand mit der Anzahl an Wicklungen und dem Wicklungsdurchmesser variiert, für den Fall dass der Motor (3) eine konstante Menge Wicklungskupfer enthält.

9. Motorantriebsvorrichtung nach Anspruch 1 oder 5, wobei
der Motor (3) einen Synchronreluktanzmotor enthält, der in einem Rotor keinen Permanentmagneten oder nur einen unterstützenden Permanentmagneten verwendet.

10. Motorantriebsvorrichtung nach einem der Ansprüche 1 bis 8, wobei
der Motor (3) einen Ferritmagneten als in einem Rotor in dem Motor verwendeten Magneten enthält.

## Revendications

1. Dispositif d'entraînement de moteur comprenant:
un circuit de redressement pleine onde (21) auquel une alimentation en courant alternatif monophasé (1) est fournie en entrée;
un onduleur (4) pour convertir le courant électrique continu délivré en sortie à partir du circuit de redressement pleine onde (21) en courant électrique alternatif;
une partie de commande (6) pour effectuer une commande d'attaque PWM sur l'onduleur (4);
une partie de lissage (7) qui est conçue pour avoir une fréquence de résonance égale ou supérieure à 40 fois une fréquence de l'alimentation en courant alternatif monophasé (1) et, en outre, est constituée par un réacteur placé dans une ligne reliant l'onduleur (4) à l'alimentation en courant alternatif monophasé (1), et un condensateur relié, en parallèle, à un côté d'entrée de l'onduleur (4); et
un moteur (3) conçu pour être entraîné par l'onduleur (4),
**caractérisé en ce que**
le moteur (3) comprend un moteur IPM ayant une spécification d'enroulement réglée pour fournir une valeur efficace de la tension induite par moteur (Vₑ) qui est inférieure à une valeur efficace de la tension (V_{g}) de l'alimentation en courant alternatif monophasé (1) dans une plage de vitesse de rotation de moteur (θ₁ - θ₂), et
la spécification d'enroulement est réglée pour fournir un intervalle de temps (θ₂ - θ₃) à l'intérieur duquel une valeur maximale de la tension induite (Vₑ) dans le moteur (3) est supérieure à une valeur instantanée de la valeur de tension absolue (V_{g}) de la tension d'alimentation en courant alternatif monophasé qui est inférieur à la moitié de la période de l'alimentation en courant alternatif monophasé (1) dans une plage de vitesse de rotation de moteur prédéterminée.

2. Dispositif d'entraînement de moteur selon la revendication 1, dans lequel
la spécification d'enroulement réglée fournit une valeur de tension efficace de la tension induite dans le moteur (3) qui est inférieure à 70 % d'une valeur de tension efficace de l'alimentation en courant alternatif monophasé (1), à l'intérieur d'une plage de vitesse de rotation de moteur prédéterminée.

3. Dispositif d'entraînement de moteur selon la revendication 1, dans lequel
la spécification d'enroulement est réglée pour fournir une somme minimisée d'une perte d'onduleur (4) et du produit d'une résistance d'enroulement de moteur et du carré d'une valeur de courant électrique efficace de moteur, la perte de moteur, dans une plage de vitesse de rotation de moteur prédéterminée, la valeur de courant électrique efficace de moteur variant avec l'augmentation et la diminution d'un intervalle de temps de régénération qui se produit autour d'un passage par zéro de l'alimentation en courant alternatif monophasé (1), et la résistance d'enroulement de moteur variant avec le nombre d'enroulements et le diamètre d'enroulement dans le cas du moteur (3) ayant une quantité constante de cuivre d'enroulement.

4. Dispositif d'entraînement de moteur selon la revendication 1, dans lequel
la spécification d'enroulement est réglée pour fournir la somme d'une perte d'onduleur (4) et du produit d'une résistance d'enroulement de moteur et du carré d'une valeur de courant électrique efficace de moteur, la perte de moteur, qui est inférieure à 1,1 fois une valeur minimale de celle-ci, à l'intérieur d'une plage de vitesse de rotation de moteur prédéterminée, la valeur de courant électrique efficace de moteur variant avec l'augmentation et la diminution d'un intervalle de temps de régénération qui se produit autour d'un passage par zéro de l'alimentation en courant alternatif monophasé (1), et la résistance d'enroulement de moteur variant avec le nombre d'enroulements et le diamètre d'enroulement dans le cas du moteur (3) ayant une quantité constante de cuivre d'enroulement.

5. Dispositif d'entraînement de moteur comprenant une alimentation en courant alternatif monophasé (1), un moteur (3), un groupe de commutateurs bidirectionnels (8) qui sont placés entre l'alimentation en courant alternatif monophasé (1) et le moteur (3) et sont conçus pour effectuer directement une commutation sur une tension alternative, et une partie de commande (6) pour effectuer une commande d'attaque PWM sur les commutateurs bidirectionnels qui forment le groupe des commutateurs bidirectionnels (8),
dans lequel le moteur (3) comprend un moteur IPM ayant une spécification d'enroulement réglée pour fournir une valeur efficace de la tension induite par moteur (Vₑ) qui est inférieure à une valeur effective de la tension (V_{g}) de l'alimentation en courant alternatif monophasé (1) dans une plage de vitesse de rotation de moteur (θ₁ - θ₂)
**caractérisé en ce que**
la spécification d'enroulement est réglée pour fournir un intervalle de temps (θ₂ - θ₃) à l'intérieur duquel une valeur maximale de la tension induite (Vₑ) dans le moteur (3) est supérieure à une valeur instantanée de la valeur de tension absolue (V_{g}) de la tension d'alimentation en courant alternatif monophasé qui est inférieur à la moitié de la période de l'alimentation en courant alternatif monophasé (1) dans une plage de vitesse de rotation de moteur prédéterminée.

6. Dispositif d'entraînement de moteur selon la revendication 5, dans lequel
la spécification d'enroulement est réglée pour fournir une valeur de tension efficace de la tension induite dans le moteur (3) qui est inférieure à 70 % d'une valeur de tension efficace de l'alimentation en courant alternatif monophasé (1), dans une plage de vitesse de rotation de moteur prédéterminée.

7. Dispositif d'entraînement de moteur selon la revendication 5, dans lequel
la spécification d'enroulement est réglée pour fournir une somme minimisée d'une perte dans le groupe des commutateurs bidirectionnels (8) et du produit d'une résistance d'enroulement de moteur et du carré d'une valeur de courant électrique efficace de moteur, la perte de moteur, dans une plage de vitesse de rotation de moteur prédéterminée, la valeur de courant électrique efficace de moteur variant avec l'augmentation et la diminution d'un intervalle de temps de régénération qui se produit autour d'un passage par zéro de l'alimentation en courant alternatif monophasé (1), et la résistance d'enroulement de moteur variant avec le nombre d'enroulements et le diamètre d'enroulement dans le cas du moteur (3) ayant une quantité constante de cuivre d'enroulement.

8. Dispositif d'entraînement de moteur selon la revendication 5, dans lequel
la spécification d'enroulement est réglée pour fournir la somme d'une perte dans le groupe des commutateurs bidirectionnels (8) et du produit d'une résistance d'enroulement de moteur et du carré d'une valeur de courant électrique efficace de moteur, la perte de moteur, qui est inférieure à 1,1 fois une valeur minimale de celle-ci, à l'intérieur d'une plage de vitesse de rotation de moteur prédéterminée, la valeur de courant électrique efficace de moteur variant avec l'augmentation et la diminution d'un intervalle de temps de régénération qui se produit autour d'un passage par zéro de l'alimentation en courant alternatif monophasé (1), et la résistance d'enroulement de moteur variant avec le nombre d'enroulements et le diamètre d'enroulement dans le cas du moteur (3) ayant une quantité constante de cuivre d'enroulement.

9. Dispositif d'entraînement de moteur selon la revendication 1 ou 5, dans lequel
le moteur (3) comprend un moteur à réluctance synchrone n'utilisant pas d'aimant permanent ou seulement un aimant permanent auxiliaire, dans un rotor.

10. Dispositif d'entraînement de moteur selon l'une quelconque des revendications 1 à 8, dans lequel
le moteur (3) comprend un aimant en ferrite, en tant qu'aimant utilisé dans un rotor dans le moteur.
